# EUROPÄISCHE PATENTSCHRIFT

(11) **EP 1 510 543 B1**
(45) Veröffentlichungstag und Bekanntmachung des Hinweises auf die Patenterteilung: **14.03.2007**
(21) Anmeldenummer: 04016059.0
(22) Anmeldetag: 08.07.2004
(51) Int. Cl.: C08J 9/14, C08G 18/48

(54) **Flammgeschützter Polyurethanhartschaumstoff, enthaltend siliconfreie Schaumstabilisatoren**
Flame-proof rigid polyurethane foam containing silicone-free silicone surfactants
Mousse rigide de polyuréthanne résistante au feu comprenant des agents tensioactifs exempts de silicones

(30) Priorität: 14.08.2003 DE 10337787
(43) Veröffentlichungstag der Anmeldung: 02.03.2005
(73) Patentinhaber: Basf AG, 67056 Ludwigshafen (DE)
(72) Erfinder: Fabisiak, Roland, 49448 Lemförde (DE); von Malotki, Peter, Dr., 49448 Lemförde (DE); Hensiek, Rainer, 49328 Melle (DE); Lehmann, Pit, 49074 Osnabrück (DE)

(56) Entgegenhaltungen:
- EP-A- 0 301 302
- EP-A- 0 386 814
- EP-A- 0 864 601
- US-A1- 2002 169 228

## Beschreibung

Die Erfindung betrifft flammgeschützte Polyurethanhartschaumstoffe, enthaltend siliconfreie Schaumstabilisatoren und Verwendung von siliconfreien Stabilisatoren zur Herstellung von Polyurethanhartschaumstoffen mit einer Flammhöhe nach EN-ISO 11925-2 von weniger als 15 cm und einen Gehalt an Flammschutzmittel von 12 bis 35 Gew.-%, bezogen auf das Gesamtgewicht der zur Herstellung des Polyurethanhartschaumstoffes verwendeten Polyolkomponente.

Im allgemeinen werden bei der Herstellung von Polyurethan-Hartschaumstoffen siliconhaltige Stabilisatoren eingesetzt (Polyurethane, Kunststoffhandbuch 7 von G. Oertel, Carl Hanser Verlag Seiten 113-115). Diese Stabilisatoren werden verwendet, da sie bereits in sehr geringen Mengen eine hervorragende stabilisierende Wirkung beim Verschäumprozess der Polyurethan-Schaumstoffe besitzen. Auch siliconfreie Stabilisatoren finden im Stand der Technik Verwendung.

DE-A-3509959 beschreibt den Einsatz siliconfreier Stabilisatoren in PUR-Hartschaumstoffen. Die so hergestellten Schäume besitzen eine äußerst niedrige Wärmeleitfähigkeit. Eine Verbesserung des Brandverhaltens, bei Einsatz von bromierten, reaktiven Flammschutzmitteln, konnte nicht nachgewiesen werden.

DE-A-3724716 und DE-A-3724717 beschreiben den Einsatz von siliconfreien Stabilisatoren zur Verbesserung der Oberflächen- und Dämmeigenschaften von Polyurethan-Hartschaumstoffen. Weiterhin soll die Löslichkeit von Halogenkohlenstoffen im Polyolgemisch verbessert werden.

In EP-A-386814 werden siliconfreie Stabilisatoren verwendet um die Dimensionsstabilität von Polyurethan-Hartschaumstoffen zu verbessern, wenn Chlorpropan im Treibmittel enthalten ist. Aufgeführt sind eine Vielzahl von siliconfreien Stabilisatoren, unter anderem alkoxylierte Alkylphenole.

EP 864 601 offenbart ein Verfahren zur Herstellung flammgeschützter Hartschaumstoffe auf Isocyanatbasis durch Umsetzung von organischen und/oder modifizierten organischen Polyisocyanaten mit mindestens einer höhermolekularen Verbindung mit mindestens zwei reaktiven Wasserstoffatomen und gegebenenfalls niedermolekularen kettenverlängerungs- und/oder Vernetzungsmitteln in Gegenwart von Flammschutzmitteln, Wasser, Treibmitteln sowie weiteren Hilfsmitteln und/oder Zusatzstoffen, das dadurch gekennzeichnet ist, dass als Treibmittel ein Gemisch aus mindestens einem bei Raumtemperatur flüssigen Kohlenwasserstoff mit 5 oder mehr Kohlenstoffatomen im Molekül und mindestens einem bei Raumtemperatur flüssigen Kohlenwasserstoff mit 5 oder mehr Kohlenstoffatomen im Molekül und mindestens einem bei Raumtemperatur gasförmigen Kohlenwasserstoff mit 4 oder weniger Kohlenstoffatomen im Molekül eingesetzt wird.

Ein generelles Problem bei Hartschaumstoffen die in Bauanwendungen eingesetzt werden ist der hohe Anteil an Flammschutzmittel welcher notwendig ist, um die nationalen Brandprüfungen und Bauvorschriften zu erfüllen. Zum einen wirkt sich der hohe Anteil Flammschutzmittel nachteilig auf die mechanischen Eigenschaften des Schaumstoffes aus, weiterhin sind die Flammschutzmittel aufgrund ihres deutlich höheren Preises im Vergleich zum Polyol ein Kostenfaktor.

Es wird deshalb nach Möglichkeiten gesucht, die Flammschutzmittelmenge zu reduzieren ohne jedoch die flammenhemmenden Eigenschaften des Systems zu verschlechtern. Eine Möglichkeit ist die Einführung von intrinsisch flammschützenden Strukturen in die Polyurethanmatrix. Dieses kann zum Beispiel durch die Einführung von Isocyanuratstrukturen erreicht werden. Mit solchen Polyisocyanurat (PIR) Schäumen lassen sich hoch flammgeschützte Systeme mit deutlich geringeren Mengen an Flammschutzmitteln herstellen. Der Nachteil solcher PIR-Schäume besteht in seinen zum Teil schlechten mechanischen Eigenschaften. Aufgrund der hohen Sprödigkeit des Schaumes ist vor allem die Haftfestigkeit solcher Schäume zu metallischen Deckschichten zum Teil sehr schlecht. Deshalb werden PIR-Systeme heutzutage noch nicht flächendeckend im Baubereich eingesetzt.

Aufgabe der vorliegenden Erfindung war es deshalb, Polyurethanschaumstoffe bereit zu stellen, die über hervorragende flammenhemmende Eigenschaften verfügen, aber mit einem deutlich geringeren Anteil an Flammschutzmitteln auskommen als gegenwärtig verfügbare Systeme.

Insbesondere sollen diese Eigenschaften sowie eine hervorragende Mechanik auch ohne reaktive bromhaltige Flammschutzmittel und/oder auf Basis von Kohlenwasserstoffen als Treibmittel, bevorzugt als alleinige Treibmittel, erreicht werden.

Überraschenderweise wurde gefunden, dass siliconfreie Stabilisatoren das Brandverhalten von PUR-Hartschaumstoffen positiv beeinflussen können, sofern sie in Kombination mit einer Polyolkomponente, welche amingestartete Polyetherpolyole enthält, verwendet werden.

Die Aufgabe konnte somit durch einen Polyurethanhartschaumstoff gemäß Anspruch 1 gelöst werden.

Gegenstand der Erfindung ist daher ein Polyurethanhartschaumstoff mit einer Flammhöhe nach EN-ISO 11925-2 von weniger als 15 cm, erhältlich durch Umsetzung von
a) Polyisocyanaten mit
b) Verbindungen mit gegenüber Isocyanatgruppen reaktiven Wasserstoffatomen, enthaltend mindestens ein amingestartetes Polyetherpolyol,
c) Treibmittel, enthaltend Kohlenwasserstoffe,
d) siliconfreie Schaumstabilisatoren und
e) Flammschutzmittel in einer Menge von 12 bis 35 Gew.-%, bezogen auf das Gesamtgewicht der Komponenten b) bis e).

Ferner ist Gegenstand der Erfindung ein Verfahren zur Herstellung von Polyurethanhartschaumstoffen durch Umsetzung von
a) Polyisocyanaten mit
b) Verbindungen mit gegenüber Isocyanatgruppen reaktiven Wasserstoffatomen, enthaltend mindestens ein amingestartetes Polyetherpolyol,
c) Treibmittel, enthaltend Kohlenwasserstoffe,
d) siliconfreie Schaumstabilisatoren und
e) Flammschutzmittel in einer Menge von 12 bis 35 Gew.-%, bezogen auf das Gesamtgewicht der Komponenten b) bis e).

Schließlich ist Gegenstand der Erfindung die Verwendung von siliconfreien Stabilisatoren zur Herstellung von Polyurethanhartschaumstoffen mit einer Flammhöhe nach EN-ISO 11925-2 von weniger als 15 cm und einen Gehalt an Flammschutzmittel von 12 bis 35 Gew.-%, bezogen auf das Gesamtgewicht der zur Herstellung des Polyurethanhartschaumstoffes verwendeten Polyolkomponente.

Im Rahmen der Erfindung wird unter Hartschaumstoff bevorzugt ein Schaumstoff gemäß DIN 7726 verstanden, d.h. der Schaumstoff weist eine Druckspannung bei 10 % Stauchung bzw. Druckfestigkeit nach DIN 53 421 / DIN EN ISO 604 von größer gleich 80 kPa, bevorzugt größer gleich 150 kPa, besonders bevorzugt größer gleich 180 kPa auf. Weiterhin verfügt der Hartschaumstoff im allgemeinen nach DIN ISO 4590 über eine Geschlossenzelligkeit von größer 85%, bevorzugt größer 90%.

Die erfindungsgemäßen Polyurethanhartschaumstoffe sind flammgeschützt, d.h. sie zeigen im Brandverhaltenstest gemäß EN-ISO 11925-2 eine Flammhöhe von weniger als 15 cm. Dieses Brandverhalten ist vergleichbar mit einer Einordnung in Kategorie B2 gemäß dem Brandtest nach DIN 4201.

Zu den eingesetzten Komponenten a) bis e) ist im einzelnen folgendes zu sagen.
a) Als Polyisocyanate kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.
   Zur Herstellung von Polyurethan-Hartschaumstoffen wird insbesondere Roh-MDI eingesetzt.
   Im Stand der Technik ist es gegebenenfalls üblich, Isocyanuratgruppen in das Polyisocyanat einzubauen. Hierfür werden bevorzugt Isocyanuratgruppen bildende Katalysatoren, beispielsweise Alkalimetallsalze alleine oder in Kombination mit tertiären Aminen eingesetzt. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.
   Im Rahmen dieser Erfindung ist es bevorzugt, dass die erfindungsgemäßen Polyurethanhartschaumstoffe im wesentlichen frei von Isocyanuratgruppen sind.
   Bevorzugt beträgt im Schaumstoff das Verhältnis Isocyanuratgruppe zu Urethangruppe kleiner als 1:10, besonders bevorzugt kleiner als 1:100. Insbesondere sind im erfindungsgemäßen Polyurethanhartschaumstoff keine Isocyanuratgruppen vorhanden.
b) Als Verbindungen mit mindestens zwei gegenüber Isocyanat reaktiven Gruppen, das heißt mit mindestens zwei mit Isocyanatgruppen reaktiven Wasserstoffatomen, kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, in Molekül tragen.

Zur Herstellung der nach dem erfindungsgemäßen Verfahren bevorzugt hergestellten Polyurethan-Hartschaumstoffe kommen insbesondere Verbindungen mit 2 bis 8 OH-Gruppen zum Einsatz. Vorzugsweise eingesetzt werden Polyetherole und/oder Polyesterole. Die Hydroxylzahl der verwendeten Polyetherole und/oder Polyesterole beträgt bei der Herstellung von Polyurethan-Hartschaumstoffen vorzugsweise 100 bis 850 mg KOH/g, besonders bevorzugt 200 bis 600 mg KOH/g, die Molekulargewichte sind vorzugsweise größer als 400.

Bevorzugt enthält Komponente b) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 3 bis 8 reaktive Wasserstoffatome gebunden enthält, oder durch kationische Polymerisation mit Lewis-Säuren, wie Antimonpentachlorid, Bortluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht Glycerin, Trimethylolpropan, Pentaerythrit, Sacharose, Sorbit sowie andere zwei oder mehrwertige Alkohole.

Es ist ein wesentliches Merkmal der Erfindung, dass die Komponente b) mindestens ein aminogestartetes Polyetherpolyol enthält. Darunter wird ein Polyetherol verstanden, das ausgehend von einem Startermolekül, welches mindestens 2 gegenüber Isocyanatgruppen reaktive Wasserstoffatome sowie mindestens ein Stickstoffatom aufweist, wobei die reaktiven Wasserstoffatome nicht zwingend Bestandteil der Aminogruppe sein müssen, und durch oben beschriebene Alkoxylierung hergestellt wird.

Beispiele für derartige Startermoleküle sind die Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3,-Propandiamin, 1,6-Hexandiamin, Ethanolamin, Diethanolamin, Triethanolamin und ähnliche.

Weiterhin können als Startermoleküle Kondensationsprodukte aus Formaldehyd, Phenol und Diethanolamin bzw. Ethanolamin, Formaldehyd, Alkylphenolen und Diethanolamin bzw. Ethanolamin, Formaldehyd, Bisphenol A und Diethanolamin bzw. Ethanolamin, Formaldehyd, Anilin und Diethanolamin bzw. Ethanolamin, Formaldehyd, Kresol und Diethanolamin bzw. Ethanolamin, Formaldehyd, Toluidin und Diethanolamin bzw. Ethanolamin sowie Formaldehyd, Toluoldiamin und Diethanolamin bzw. Ethanolamin und ähnliche verwendet werden.

Bevorzugt wird als Startermolekül ein Kondensationsprodukt aus Bisphenol A, Formaldehyd und Diethanolamin verwendet.

In einer besonders bevorzugten Ausführungsform enthält die Komponente b) zwei voneinander verschiedene amingestartete Polyetherpolyole.

Im allgemeinen beträgt der Anteil der amingestarteten Polyetherpolyole 5 - 70 Gew.-Teile, bezogen auf das Gesamtgewicht der Komponente b), vorzugsweise 15 - 60 Gew.-Teile, insbesondere 20 bis 55 Gew.-Teile.

Ferner kann die Komponente b) optional Polyesterole, Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Als Treibmittelkomponente c) werden Kohlenwasserstoffe eingesetzt. Diese können im Gemisch mit Wasser und/oder weiteren physikalische Treibmittel eingesetzt werden. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale.

Die Treibmittelkomponente c) wird üblicherweise in einer Menge von 2 bis 45 Gew.-%, bevorzugt 4 bis 30 Gew.-%, besonders bevorzugt 5 bis 20 Gew.-%, bezogen auf das Gesamtgewicht der Komponenten b) bis e) eingesetzt.

In einer bevorzugten Ausführungsform enthält das Treibmittelgemisch c) ausschließlich Kohlenwasserstoffe. Besonders bevorzugte Kohlenwasserstoffe sind n-Pentan, Cyclopentan, iso-Pentan sowie Mischungen der Isomeren. Insbesondere wird n-Pentan als Treibmittel c) verwendet

Es ist ferner bevorzugt, dass die Treibmittel-Komponente c) weniger als 5 Gew.-%, mehr bevorzugt weniger als 2 Gew.-%, besonders bevorzugt weniger als 1 Gew.-%, insbesondere 0 Gew.-%, bezogen auf das Gesamtgewicht der Komponenten b) bis e), an Fluorchlorkohlenwasserstoffen, Chlorkohlenwasserstoffen oder Fluorkohlenwasserstoffen enthält.

Als siliconfreie Schaumstabilisatoren d) werden Stoffe verstanden , welche die Ausbildung einer regelmäßigen Zellstruktur bei der Schaumbildung fördern und keine Siliziumatome aufweisen.

Beispielsweise sind genannt: Alkoxylierungsprodukte von Fettalkoholen, Oxoalkoholen, Fettaminen, Alkylphenolen, Dialkylphenolen, Alkylkresolen, Alkylresorcin, Naphtol, Alkylnaphtol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphtol, Formaldehyd und Alkylnaphtol sowie Formaldehyd und Bisphenol A.
Als Alkoxylierungsreagenzien können beispielsweise Ethylenoxid, Propylenoxid, Poly-THF sowie höhere Homologe verwendet werden.
Weiterhin können als siliconfreie Stabilisatoren beispielsweise eingesetzt werden: Alkoxylierungsprodukte von alkylierte Piperidine, alkylierte Piperazine, alkylierte Indole und ähnliche.

In einer bevorzugten Ausführungsform wird als siliconfreier Stabilisator ein alkoxyliertes Kondensationsprodukt aus Alkylphenol und Formaldehyd, bevorzugt ein alkoxyliertes Kondensationsprodukt aus Nonylphenol und Formaldehyd verwendet.

Die siliconfreien Schaumstabilisatoren werden üblicherweise in einer Menge von 0,1 bis 10 Gew.-%, bevorzugt von 0,5 bis 5 Gew.-%, besonders bevorzugt von 1 bis 3 Gew.-% eingesetzt.

Zusätzlich zu den siliconfreien Schaumstabilisatoren können auch siliconhaltige Schaumstabilisatoren, wie Siloxan-Oxalkylen-Mischpolymerisate und andere Organopolysiloxane verwendet werden. In einer bevorzugten Ausführungsform beträgt das Verhältnis der Anteile an siliconfreiem Stabilisator zu siliconhaltigem Stabilisator 25:1 bis 1:1, bevorzugt 15:1 bis 2:1, besonders bevorzugt 10:1 bis 2:1.

Als Flammschutzmittel e) können im allgemeinen die aus dem Stand der Technik bekannten Flammschutzmittel verwendet werden. Geeignete Flammschutzmittel sind beispielsweise bromierte Ether (Ixol), bromierte Alkohole wie Dibromneopentylakohol, Tribromneopentylalkohol und PHT-4-Diol sowie chlorierte Phosphate wie z.B., Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU-Hartschaumstoffe verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

In einer bevorzugten Ausführungsform werden bromfreie Flammschutzmittel wie beispielsweise TCPP, sowie besonders bevorzugt halogenfreie Flammschutzmittel wie beispielsweise. DEEP eingesetzt.

Die Flammschutzmittel e) werden im Rahmen der vorliegenden Erfindung in einer Menge von 12 bis 35 Gew.-%, bevorzugt von 13 bis 33 Gew.-%, mehr bevorzugt von 15 bis 31 Gew.-%, noch mehr bevorzugt von 17 bis 30 Gew.-%, besonders bevorzugt von 19 bis 28 Gew.-%, insbesondere von 21 bis 27 Gew.-%, bezogen auf das Gesamtgewicht der Komponenten b) bis e) verwendet.

Zusätzlich zu den Komponenten a) bis e) können die üblichen Katalysatoren, Hilfs- und/oder Zusatzstoffe eingesetzt werden.

Als Katalysatoren werden vorzugsweise tertiäre Amine, Zinn-Katalysatoren oder Alkalisalze verwendet. Es besteht auch die Möglichkeit, die Reaktionen ohne Katalyse ablaufen zu lassen. In diesem Fall wird die katalytische Aktivität der aminogestartetes Polyole ausgenutzt.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 3. Auflage 1993, zu entnehmen.

Zur Herstellung der Polyurethan-Hartschaumstoffe werden die Polyisocyanate a) und die Komponenten b) bis e) in solchen Mengen zur Umsetzung gebracht, dass die Isocyanat-Kennzahl des Schaums 90 bis 250, bevorzugt 100 bis 180, mehr bevorzugt 110 bis 140 beträgt.

Die Polyurethan-Hartschaumstoffe können diskontinuierlich oder kontinuierlich mit Hilfe bekannter Verfahren (z. B. Doppelband) hergestellt werden.

Als besonders vorteilhaft hat es sich erwiesen, nach dem Zweikomponenten-Verfahren zu arbeiten und die Verbindungen mit mindestens zwei mit Isocyanatgruppen reaktiven Wasserstoffatomen zusammen mit den Treibmitteln, Schaumstabilisatoren und Flammschutzmitteln sowie den optionalen Katalysatoren und Hilfs- und/oder Zusatzstoffen zu einer sogenannten Polyolkomponente zu vereinigen und diese mit den Polyisocyanaten oder Mischungen aus den Polyisocyanaten und gegebenenfalls Treibmitteln, auch als Isocyanatkomponente bezeichnet, zur Umsetzung zu bringen.

Die vorliegende Erfindung soll durch nachfolgende Beispiele veranschaulicht werden:

Folgende Komponenten wurden in den Beispielen verwendet:
- Polyetherol 1:: Polyetherol auf der Basis von Sorbit und Propylenoxid, Hydroxylzahl 490 mg KOH/g.
- Polyetherol 2:: Polyetherol auf der Basis von Ethylendiamin und Propylenoxid, Hydroxylzahl 750 mg KOH/g.
- Polyetherol 3:: Polyetherol auf der Basis von Ethylenglycol und Ethylenoxid, Hydroxylzahl 200 mg KOH/g.
- Polyetherol 4:: Reaktionsprodukt aus einer Mannichbase auf der Basis von Bisphenol A, Diethanolamin und Formaldehyd
sowie Propylenoxid, Hydroxylzahl 530 mg KOH/g.
- Polyetherol 5:: Polyetherol auf der Basis von Sorbit und Propylenoxid, Hydroxylzahl 340 mg KOH/g.
- Polyetherol 6:: Polyetherol auf der Basis von Glycerin und Propylenoxid, Hydroxylzahl 800 mg KOH/g.

- Polyesterol 1:: Polyesterol auf der Basis von Adipinsäure, Phthalsäure, Ölsäure und Trimethylolpropan, Hydroxylzahl 385 mg KOH/g.

- Flammschutzmittel 1:: Tris-(2-chlorisopropyl)-phosphat (TCPP)
- Flammschutzmittel 2:: Diethyl-ethanphosphonat (DEEP)
- Flammschutzmittel 3:: bromierter Polyether (Ixol)

- Stabilisator 1:: Siliconhaltiger Stabilisator
- Stabilisator 2:: Siliconfreier Stabilisator

- Treibmittel 1:: Wässrige Lösung von Dipropylenglycol
- Treibmittel 2:: n-Pentan

- Katalysator:: Dimethylcyclohexylamin (DMCHA)

- Isocyanat:: Polymeres Diphenylmethandiisocyanat, PMDI, Lupranat® M50 (BASF)

### Index 120

Es wurden Hartschaumstoffe durch Vermischen der Polyolkomponente mit dem Treibmittel, dem Katalysator sowie des Isocyanats hergestellt. Die Prüfkörper für den Kleinbrennertest wurden durch Ausschäumen einer Kastenform der Abmessung 20 cm x 20 cm x 20 cm hergestellt. Die Treibmittelmenge wurde so gewählt, das die freigeschäumte Rohdichte 45 ± 1 g/dm³ ergab. Der Kleinbrennertest wurde nach EN-ISO 11925-2 durchgeführt. Die Aushärtung wurde an einem Becherschaum gemessen. Dabei wurde 10 min nach Beginn der Verschäumung ein Stahlbolzen 10 mm tief in die Schaumoberfläche eingedrückt und die dazu notwendige Kraft gemessen.

**Tabelle 1**

| Bei den Beispielen 1 - 4 handelt es sich um Vergleichsbeispiele. Die Beispiele 5 bis 7 sind erfindungsgemäß. | | | | | | | |
|---|---|---|---|---|---|---|---|
| | Bsp. 1 | Bsp.2 | Bsp. 3 | Bsp. 4 | Bsp. 5 | Bsp. 6 | Bsp. 7 |
| | | | | | | | |
| Polyetherol 1 | 55,5 | - | 38 | 38,5 | 28 | 24 | 30 |
| Polyetherol 2 | - | 10 | - | 10 | 15 | 15 | 10 |
| Polyetherol 3 | - | 25 | - | 25 | 10 | - | - |
| Polyetherol 4 | - | 38,5 | - | - | - | 15 | 28 |
| Polyetherol 5 | - | - | 20 | - | - | 14 | - |
| Polyetherol 6 | - | - | 10 | - | - | - | - |
| Polyesterol 1 | - | - | - | - | 15 | - | - |
| | | | | | | | |
| Flammschutzmittel 1 | 17 | 20 | 30 | 20 | 30 | 30 | 30 |
| Flammschutzmittel 2 | 4 | 5 | - | 5 | - | - | - |
| Flammschutzmittel 3 | 22 | - | - | - | - | - | - |
| | | | | | | | |
| Stabilisator 1 | 1,5 | 1,5 | 0,4 | 1,5 | - | 0,3 | 0,2 |
| Stabilisator 2 | - | - | 1,6 | - | 2 | 1,7 | 1,8 |
| Treibmittel 1 | 1,7 | 3 | 2,4 | 3 | 3,1 | 3,3 | 3,3 |
| Treibmittel 2 | 6 | 6 | 8,5 | 6 | 6 | 6 | 6 |
| Katalysator | 4 | 1,5 | 6,5 | 3 | 1,8 | 1,9 | 1,7 |
| | | | | | | | |
| Isocyanat | 140 | 126 | 125 | 126 | 134 | 130 | 132 |
| | | | | | | | |
| Brandverhalten; | 14 cm | 16,3 cm | 20 cm | 16,2 | 13,4 | 12,3 | 12,8 |
| Flammhöhe nach EN-ISO 11925-2 | | | | | | | |
| Aushärtung (10 min) | Sehr Gut | mittel | Gut | Schlecht | Schlecht | Sehr Gut | Sehr Gut |

## Patentansprüche

1. Polyurethanhartschaumstoff mit einer Flammhöhe nach EN-ISO 11925-2 von weniger als 15 cm, erhältlich durch Umsetzung von
a) Polyisocyanaten mit
b) Verbindungen mit gegenüber Isocyanatgruppen reaktiven Wasserstoffatomen, enthaltend mindestens ein amingestartetes Polyetherpolyol,
c) Treibmittel, enthaltend Kohlenwasserstoffe,
d) siliconfreie Schaumstabilisatoren und
e) Flammschutzmittel in einer Menge von 12 bis 35 Gew.-%, bezogen auf das Gesamtgewicht der Komponenten b) bis e).

2. Polyurethanhartschaumstoff nach Anspruch 1, **dadurch gekennzeichnet, dass** als siliconfreier Stabilisator ein alkoxyliertes Kondensationsprodukt aus Alkylphenol und Formaldehyd, bevorzugt ein alkoxyliertes Kondensationsprodukt aus Nonylphenol und Formaldehyd verwendet wird.

3. Polyurethanhartschaumstoff nach Anspruch 1 oder 2, **dadurch gekennzeichnet, dass** in der Komponente d) zusätzlich ein siliconhaltiger Schaumstabilisator verwendet wird, wobei das Verhältnis der Anteile an siliconfreiem Schaumstabilisator zu siliconhaltigem Schaumstabilisator im Bereich von 25:1 bis 1:1 liegt.

4. Polyurethanhartschaumstoff nach einem der Ansprüche 1 bis 3, **dadurch gekennzeichnet, dass** die Treibmittel-Komponente c) weniger als 5 Gew.-%, bezogen auf das Gesamtgewicht der Komponenten b) bis e), an Fluorchlorkohlenwasserstoffen, Chlorkohlenwasserstoffen oder Fluorkohlenwasserstoffen enthält.

5. Polyurethanhartschaumstoff nach einem der Ansprüche 1 bis 4, **dadurch gekennzeichnet, dass** als Treibmittel-Komponente c) n-Pentan, Cyclopentan, iso-Pentan sowie Mischungen der Isomeren verwendet wird.

6. Polyurethanhartschaumstoff nach einem der Ansprüche 1 bis 5, **dadurch gekennzeichnet, dass** als amingestartetes Polyetherpolyol ein alkoxyliertes Kondensationsprodukt aus Bisphenol A, Formaldehyd und Diethanolamin verwendet wird.

7. Polyurethanhartschaumstoff nach einem der Ansprüche 1 bis 6, **dadurch gekennzeichnet, dass** als Flammschutzmittel bromfreie Verbindungen, bevorzugt halogenfreie Verbindungen, verwendet werden.

8. Verfahren zur Herstellung von Polyurethanhartschaumstoffen durch Umsetzung von
a) Polyisocyanaten mit
b) Verbindungen mit gegenüber Isocyanatgruppen reaktiven Wasserstoffatomen, enthaltend mindestens ein amingestartetes Polyetherpolyol,
c) Treibmittel, enthaltend Kohlenwasserstoffe,
d) siliconfreie Schaumstabilisatoren und
e) Flammschutzmittel in einer Menge von 12 bis 35 Gew.-%, bezogen auf das Gesamtgewicht der Komponenten b) bis e).

9. Verwendung von siliconfreien Stabilisatoren in Kombination mit Verbindungen mit gegenüber Isocyanatgruppen reaktiven Wasserstoffatomen, enthaltend mindestens ein amingestartetes Polyetherpolyol, zur Herstellung von Polyurethanhartschaumstoffen mit einer Flammhöhe nach EN-ISO 11925-2 von weniger als 15 cm und einen Gehalt an Flammschutzmittel von 12 bis 35 Gew.-%, bezogen auf das Gesamtgewicht der zur Herstellung des Polyurethanhartschaumstoffes verwendeten Polyolkomponente.

10. Verwendung nach Anspruch 9, **dadurch gekennzeichnet, dass** es sich um Polyurethanhartschaumstoffe handelt, die mit Kohlenwasserstoffen als Treibmittel hergestellt wurden.

## Claims

1. A rigid polyurethane foam having a flame height, according to EN-ISO 11925-2, of less than 15 cm, obtainable by reacting
a) polyisocyanates with
b) compounds having hydrogen atoms reactive toward isocyanate groups, comprising at least one amine-initiated polyetherpolyol,
c) blowing agents comprising hydrocarbons,
d) silicone-free foam stabilizers and
e) flameproofing agents in an amount of from 12 to 35% by weight, based on the total weight of the components b) to e).

2. The rigid polyurethane foam according to claim 1, wherein the silicone-free stabilizer used is an alkoxylated condensate of alkylphenol and formaldehyde, preferably an alkoxylated condensate of nonylphenol and formaldehyde.

3. The rigid polyurethane foam according to claim 1 or 2, wherein a silicone-containing foam stabilizer is additionally used in component d), the ratio of the proportions of silicone-free foam stabilizer to silicone-containing foam stabilizer being from 25:1 to 1:1.

4. The rigid polyurethane foam according to any of claims 1 to 3, wherein the blowing agent component c) comprises less than 5% by weight, based on the total weight of the components b) to e), of chlorofluorocarbons, chlorohydrocarbons or fluorohydrocarbons.

5. The rigid polyurethane foam according to any of claims 1 to 4, wherein the blowing agent component c) used is n-pentane, cyclopentane, isopentane or a mixture of the isomers.

6. The rigid polyurethane foam according to any of claims 1 to 5, wherein the amine-initiated polyetherpolyol used is an alkoxylated condensate of bisphenol A, formaldehyde and diethanolamine.

7. The rigid polyurethane foam according to any of claims 1 to 6, wherein the flameproofing agents used are bromine-free compounds, preferably halogen-free compounds.

8. A process for the preparation of rigid polyurethane foams by reacting
a) polyisocyanates with
b) compounds having hydrogen atoms reactive toward isocyanate groups, comprising at least one amine-initiated polyetherpolyol,
c) blowing agents comprising hydrocarbons,
d) silicone-free foam stabilizers and
e) flameproofing agents in an amount of from 12 to 35% by weight, based on the total weight of the components b) to e).

9. The use of silicone-free stabilizers in combination with compounds having hydrogen atoms reactive toward isocyanate groups, comprising at least one amine-initiated polyetherpolyol, for the preparation of rigid polyurethane foams having a flame height, according to EN-ISO 11925-2, of less than 15 cm and a content of flameproofing agents of from 12 to 35% by weight, based on the total weight of the polyol component used for the preparation of the rigid polyurethane foam.

10. The use according to claim 9, wherein the rigid polyurethane foams are those which were prepared using hydrocarbons as blowing agents.

## Revendications

1. Mousse dure de polyuréthanne présentant une hauteur de flamme selon la norme EN-ISO 11925-2 de moins de 15 cm, que l'on peut obtenir par réaction
a) de polyisocyanates avec
b) des composés comportant des atomes d'hydrogène réactifs vis-à-vis de groupes isocyanate, contenant au moins un polyétherpolyol amorcé par de l'amine,
c) de l'agent moussant, contenant des hydrocarbures,
d) des stabilisants de mousse exempts de silicone, et
e) de l'agent ignifuge en une quantité de 12 à 35 % en poids, par rapport au poids total des composants b) à e).

2. Mousse dure de polyuréthanne suivant la revendication 1, **caractérisée en ce que**, comme stabilisant exempt de silicone, on utilise un produit de condensation alcoxylé à base d'alkylphénol et de formaldéhyde, de préférence un produit de condensation alcoxylé à base de nonylphénol et de formaldéhyde.

3. Mousse dure de polyuréthanne suivant la revendication 1 ou 2, **caractérisée en ce que**, dans le composant d), on utilise en supplément un stabilisant de mousse contenant de la silicone, le rapport entre les fractions de stabilisant de mousse exempt de silicone et de stabilisant de mousse contenant de la silicone étant de l'ordre de 25/1 à 1/1.

4. Mousse dure de polyuréthanne suivant l'une des revendications 1 à 3, **caractérisée en ce que** le composant d'agent moussant c) contient moins de 5 % en poids, par rapport au poids total des composants b) à e), d'hydrocarbures fluorochlorés, d'hydrocarbures chlorés ou d'hydrocarbures fluorés.

5. Mousse dure de polyuréthanne suivant l'une des revendications 1 à 4, **caractérisée en ce que**, comme composant d'agent moussant c), on utilise du n-pentane, du cyclopentane, de l'isopentane ainsi que des mélanges des isomères.

6. Mousse dure de polyuréthanne suivant l'une des revendications 1 à 5, **caractérisée en ce que**, comme polyétherpolyol amorcé par de l'amine, on utilise un produit de condensation alcoxylé à base de bisphénol A, de formaldéhyde et de diéthanolamine.

7. Mousse dure de polyuréthanne suivant l'une des revendications 1 à 6, **caractérisée en ce que**, comme agent ignifuge, on utilise des composés exempts de brome, de préférence des composés exempts d'halogène.

8. Procédé de préparation de mousses dures de polyuréthanne, par réaction
a) de polyisocyanates avec
b) des composés comportant des atomes d'hydrogène réactifs vis-à-vis de groupes isocyanate, contenant au moins un polyétherpolyol amorcé par de l'amine,
c) de l'agent moussant, contenant des hydrocarbures,
d) des stabilisants de mousse exempts de silicone, et
e) de l'agent ignifuge en une quantité de 12 à 35 % en poids, par rapport au poids total des composants b) à e).

9. Utilisation de stabilisants exempts de silicone en combinaison avec des composés comportant des atomes d'hydrogène réactifs vis-à-vis de groupes isocyanate, contenant au moins un polyétherpolyol amorcé par de l'amine, pour la préparation de mousses dures de polyuréthanne présentant une hauteur de flamme selon la norme EN-ISO 11925-2 de moins de 15 cm et une teneur en agent ignifuge de 12 à 35 % en poids, par rapport au poids total des composants de polyol utilisés pour la préparation de la mousse dure de polyuréthanne.

10. Utilisation suivant la revendication 9, **caractérisé en ce qu'**il s'agit de mousses dures de polyuréthanne qui sont préparées avec des hydrocarbures comme agents moussants.
